# DEMANDE DE BREVET EUROPEEN

(11) **EP 1 868 051 A1**
(43) Date de publication de la demande: **19.12.2007**
(21) Numéro de dépôt: 06290977.5
(22) Date de dépôt: 15.06.2006
(51) Int. Cl.: G05B 19/045, G05B 17/02, B61L 23/00

(54) **Procédé de validation d'un système de contrôle/commande et système de contrôle/commande pouvant être validé par le procédé**

(71) Demandeur: Société Nationale des Chemins de Fer Français, 75014 Paris (FR)
(72) Inventeur: Ammad, Nadia, 75012 Paris (FR); Maillot, Patrick, 37250 Montbazon (FR); Antoni, Marc, 75018 Paris (FR)
(74) Mandataire: Bloch, Gérard

(57) **Abrégé**

Le Système comporte un module (13) de gestion, des entrées (11) tout ou rien représentatives d'événements externes (en) et des sorties (17) tout ou rien commandant des actionneurs externes (4,5), des modules (15) automatiques d'exécution de tâches (n) prédéterminées pour, en réponse aux dits événements (en), agir sur lesdites sorties (17), l'ensemble des états des entrées (11) et sorties (17) à un instant donné (Ti) constituant un état global instantané (Fi) du système (3), l'ensemble des états des entrées (11) et sorties (17) obtenu à la fin d'une exécution de tâche (n) constituant un état global stabilisé (ESj) du système (3). Le module de gestion (13) n'autorise (20) l'exécution d'une tâche (n) correspondant à un événement externe (en) quelconque que si aucune tâche (n-1) correspondant à un autre événement (en-1) n'est en cours d'exécution et l'action des modules automatiques (15) ne débouche que sur un nombre fini d'états globaux (Fi).

## Description

La présente invention est née d'un problème qui concerne les systèmes informatiques de contrôle / commande automatique de postes d'aiguillage de réseaux de chemins de fer et, plus particulièrement, les procédés de validation de tels systèmes.

Les postes d'aiguillage de réseaux de chemins de fer permettent de positionner les aiguilles d'un réseau selon les besoins des différents convois ferroviaires l'empruntant afin d'y assurer en permanence la continuité du trafic.

Autrefois actionnées à la main, les aiguilles sont maintenant commandées automatiquement à distance par des systèmes de contrôle / commande situés dans les postes d'aiguillage. Les postes d'aiguillage peuvent eux-mêmes être reliés entre eux et à un poste de conduite centralisée où se trouvent toutes les données nécessaires sur le flux ferroviaire : état du réseau, horaires théoriques, positions des convois et des trains, etc...

Toute discontinuité mécanique du réseau, par exemple une mauvaise position ou un entrebâillement d'aiguillage, est de nature catastrophique et constitue un événement redouté inacceptable. Il en est de même d'une rupture de compatibilité d'occupation des voies pouvant entraîner des télescopages, des rattrapages ou des prises en écharpe.

Le problème de la sûreté et de la sécurité de fonctionnement des systèmes informatiques des postes d'aiguillage est donc un problème essentiel.

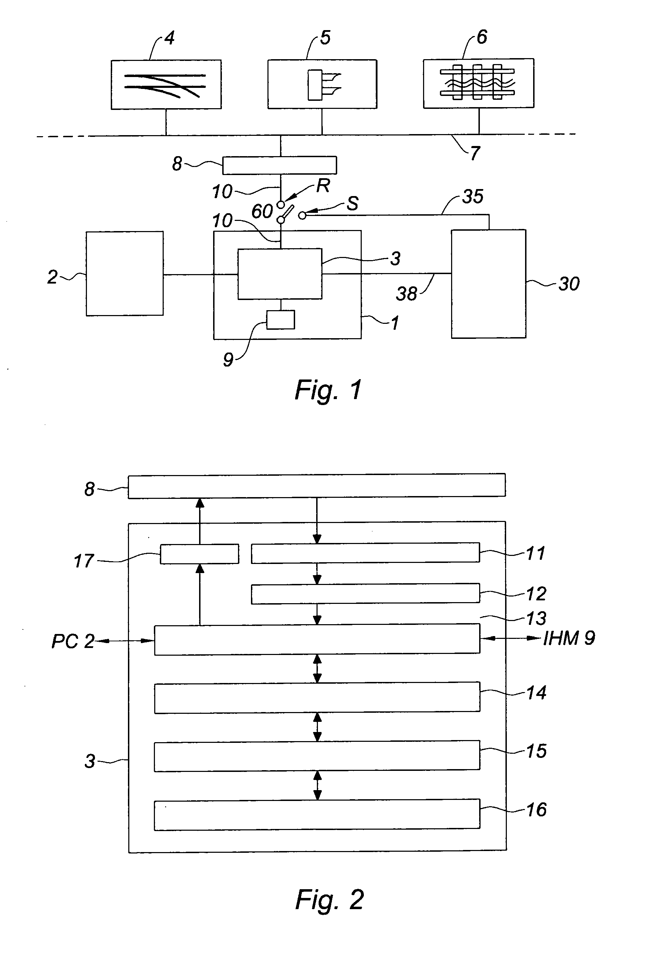

Actuellement, pour vérifier la sûreté de fonctionnement d'un poste d'aiguillage en cours de création et d'essais ou de postes déjà en exploitation mais sur lesquels des évolutions fonctionnelles sont entreprises, le système informatique qui l'équipe fait d'abord l'objet de phases de tests unitaires, fonction par fonction et déconnecté du réseau, puis de tests plus globaux avec enchaînement des diverses fonctions, le tout en simulant, au moyen d'un simulateur 30, par exemple comme montré sur la figure 1, les divers capteurs et automatismes 4-6 de la partie de réseau concernée et en excitant le système informatique 3 par ses entrées 35,10, et en récupérant ses sorties et les données utiles à la vérification par une liaison informatique 38.

Ces tests ont pour but de vérifier que les automatismes réalisés fonctionnent comme il a été prévu, c'est-à-dire conformément à des modèles définis par les outils de conception, tels que GRAFCET. Pour cela, on vérifie que les états des sorties des automatismes obtenus lors des tests sont conformes à ceux donnés par les outils de conception.

On effectue ensuite des phases d'essais en réel du système, le système étant cette fois relié aux capteurs et aux automatismes, aiguilles, panneaux de signalisation, ... du réseau, fonction par fonction, puis globalement sur l'ensemble de la partie de réseau concernée, puis éventuellement en liaison avec le poste de conduite centralisé.

Phases de tests et d'essais sont définies par les équipes de validation du système. Ces équipes établissent des programmes de simulation pour le simulateur et des programmes d'essais, à assurer par elles-mêmes, qui sont autant de scénarios d'événements successifs ou parfois simultanés à considérer comme possibles.

Or les systèmes informatiques de contrôle / commande dont il est ici question sont destinés à traiter instantanément tout changement d'état, ce qui engendre un nombre considérable de scénarios d'événements à envisager, impossibles à dénombrer.

De plus, comme les tests et les essais réels sont réalisés dans des conditions de mise en oeuvre différentes, notamment temporelles, on ne peut pas être certain que le changement de ces conditions n'affecte pas l'intégrité de la validation. Il n'est ainsi pas possible d'être sûr qu'un événement redouté ne peut pas se produire.

Ce procédé de validation des systèmes considérés, composé de tests et d'essais, n'est donc pas satisfaisant pour deux raisons fondamentales : i) la combinatoire des scénarios est si grande qu'elle oblige à en faire une sélection et ii) les phases de validation reposent sur des mises en oeuvre différentes les unes des autres.

Dans ces conditions, et quels que soient les efforts consentis, aucune preuve complète et formelle de sûreté de fonctionnement et/ou d'intégrité du système informatique de contrôle / commande ne peut être établie.

Et c'est parce qu'on tente toujours d'obtenir, autant que faire se peut, cette preuve inaccessible, qu'actuellement la validation des systèmes de ce type est irrémédiablement longue et coûteuse.

Ce problème de validation n'est d'ailleurs pas limité, dans le monde ferroviaire, aux seuls systèmes de postes d'aiguillage. Il peut concerner d'autres équipements, comme par exemple les commandes des portes des wagons. Mais plus généralement, le problème est lié aux systèmes de contrôle / commande (traduction du mot anglais « control ») temps réel de processus industriels, quelles que soient les échelles de temps en cause.

Ainsi, comme autres systèmes de contrôle / commande temps réel, on peut considérer les systèmes de pilotage de tous moyens de déplacement, d'avions, de navires, ... les systèmes de conduite de centrales nucléaires ou autres usines, les systèmes transactionnels, etc.

Comme pour la validation des postes d'aiguillage, il ne peut être toléré la moindre prise de risque critique et encore moins la moindre prise de risque catastrophique pour la validation des systèmes temps réel ci-dessus. Pour les mêmes raisons, la preuve qu'aucun événement redouté ne surgira ne peut être apportée au cours de la validation.

La demanderesse a donc cherché un procédé pour obtenir une telle preuve lors de la validation d'un système temps réel - système de pilotage de poste d'aiguillage de réseau ferroviaire ou autre - et c'est ainsi qu'elle propose son invention.

Ainsi, la présente invention concerne tout d'abord un procédé de validation d'un système temps réel de contrôle / commande de processus industriel, le système temps réel comportant des entrées, dont les changements d'état sont représentatifs d'événements externes, des sorties, destinées à commander des actionneurs externes, et des modules automatiques agencés pour exécuter des tâches en réponse aux dits événements et agir sur lesdits actionneurs par lesdites sorties, l'ensemble des états des entrées et sorties à un instant donné constituant un état global instantané du système, l'ensemble des états des entrées et sorties obtenu à la fin de l'exécution d'une tâche constituant un état global stabilisé du système, le procédé de validation comportant les étapes suivantes :
- on établit une liste d'événements redoutés,
- on en déduit par complémentarité les fonctions essentielles desdits modules automatiques,
- on établit une liste des caractéristiques de fonctionnement desdits actionneurs,
- on définit un état global stabilisé initial du système,
- à partir dudit état global stabilisé initial, on simule un événement externe et un seul pour obtenir un état global stabilisé résultant et
- on continue la simulation événement après événement pour, état global stabilisé après état global stabilisé, obtenir un état global stabilisé déjà simulé.

De préférence, on continue la simulation ci-dessus tant que toutes les combinaisons possibles d'événements et d'états globaux stabilisés n'ont pas été simulées.

Si on obtient un état global instantané caractéristique d'un événement redouté, on arrête la simulation et on décrète le système temps réel inacceptable.

Si on ne peut obtenir d'état global stabilisé à la suite de la simulation d'un événement et d'un état global stabilisé particuliers, on émet une alerte.

On simule systématiquement tous les événements externes possibles sur tous les états globaux stabilisés, ce qui est ici possible puisqu'ils sont tous en nombre fini et peuvent être même déterminés automatiquement.

En effet, comme l'exécution d'une tâche correspondant à un événement quelconque n'est autorisée que si aucune tâche n'est déjà en cours d'exécution, on élimine toutes les combinaisons imprévisibles des événements qui pourraient se produire au cours de l'exécution d'une tâche.

Il n'y a ainsi plus de combinatoire non dénombrable d'événements. Les tâches correspondant à tous les événements externes possibles sont testées pour tous les états globaux stabilisés initiaux possibles et elles ne peuvent être déclenchées qu'à partir de ces mêmes états globaux stabilisés.

En imposant ces conditions, qui peuvent paraître aller à l'encontre de l'idée même de ce qu'est un système temps réel, on rend la variable « temps » externe au système, comme les autres entrées, et on évite qu'elle intervienne aléatoirement pendant l'exécution d'une tâche.

On peut ainsi obtenir une validation exhaustive du système et donc une preuve de sécurité du système.

Après la simulation, en phase d'essais, puis après sa mise en service, le système fonctionne dans les mêmes conditions matérielles et / ou temporelles que ci-dessus au cours des phases de tests. Il n'y a donc plus de mise en oeuvre différente entre les phases de tests et d'essais de validation.

Pour réduire encore la complexité du système ou le nombre de ses états globaux, outre le fait qu'on limite l'ensemble des états globaux en entrée de chaque tâche à des états globaux stabilisés, on propose de limiter :
- les simulations à des sous-ensembles d'états globaux stabilisés partiels automatiquement déduits à partir des états globaux stabilisés théoriques,
- les fonctions des modules automatiques à celles autorisées par les règlements en vigueur dans le processus industriel.

Corrélativement, l'invention concerne également un système temps réel de contrôle / commande de processus industriel comportant un module de gestion, des entrées tout ou rien représentatives d'événements externes et des sorties tout ou rien commandant des actionneurs externes, des modules automatiques d'exécution de tâches prédéterminées pour, en réponse aux dits événements, agir sur lesdites sorties, l'ensemble des états des entrées et sorties à un instant donné constituant un état global instantané du système, l'ensemble des états des entrées et sorties obtenu à la fin d'une exécution de tâche constituant un état global stabilisé du système, le système étant caractérisé par le fait que le module de gestion est agencé pour n'autoriser l'exécution d'une tâche correspondant à un événement externe quelconque que si aucune tâche correspondant à un autre événement n'est en cours d'exécution et les modules automatiques sont agencés pour que leur action correspondante ne débouche que sur un nombre fini d'états globaux.

Comme l'exécution d'une tâche correspondant à un événement externe quelconque n'est autorisée que si aucune tâche correspondant à un autre événement antérieur n'est en cours d'exécution, on élimine toutes les combinaisons imprévisibles des événements qui pourraient se produire au cours de l'exécution des tâches.

De préférence, chacun des modules automatiques est agencé pour qu'il ne puisse résulter de son action qu'un nombre fini d'états globaux stabilisés.

D'autres caractéristiques et avantages de la présente invention apparaîtront plus clairement à la lecture de la description ci-après, en référence aux dessins en annexe sur lesquels
- la figure 1 représente un schéma de structure de poste d'aiguillage comprenant le système de contrôle / commande selon l'invention et un système de validation classique pouvant mettre en oeuvre partiellement le procédé de validation selon l'invention ;
- la figure 2 représente un schéma de structure organique du système de contrôle / commande équipant le poste d'aiguillage ;
- la figure 3 représente un schéma par blocs fonctionnels du système de contrôle / commande de la figure 2, et la structure qu'il doit respecter pour pouvoir être validé selon le procédé de validation de l'invention ;
- la figure 4 représente un organigramme simplifié de fonctionnement du système de contrôle / commande mettant en oeuvre la structure de la figure 3 ;
- la figure 5 représente un schéma par blocs fonctionnels d'un premier système de validation, classique, pouvant mettre en oeuvre le procédé de validation selon l'invention ;
- la figure 6 représente un schéma par blocs fonctionnels d'un second système, préféré, de validation mettant en oeuvre le procédé de validation selon l'invention et
- la figure 7 représente un organigramme simplifié du procédé de validation selon l'invention.

En référence à la figure 1, le poste d'aiguillage 1, en liaison avec un poste central PC 2, duquel il reçoit des données d'exploitation de réseau, comporte un système de contrôle / commande 3, essentiellement un ordinateur industriel permettant le contrôle et la commande automatique d'aiguillages 4, la commande automatique de panneaux de signalisation 5 et le contrôle de l'état du réseau et du passage des trains à l'aide de capteurs 6. En pratique, le système de contrôle / commande 3 comporte au moins deux ordinateurs industriels.

Les aiguillages 4 et les panneaux de signalisation 5, qu'on désignera par la suite sous le nom d'actionneurs 4, 5, qui sont en fait les organes qui actionnent ces aiguillages et panneaux, ainsi que les capteurs 6, qui délivrent en retour des états tout ou rien, ou TOR, et éventuellement des mesures M, sont tous situés dans une zone du réseau ferroviaire affectée au poste 1, le PC 2 assurant la coordination avec les autres postes du réseau, mais qui peuvent aussi être reliés entre eux pour communiquer, indépendamment du PC2.

L'ordinateur 3 permet la mise en oeuvre d'un système temps réel de contrôle / commande de processus industriel classique, c'est-à-dire capable de collecter des données telles que des états TOR et des mesures M venant de la zone du réseau, de les traiter et d'émettre en retour des ordres TOR et éventuellement des mesures de consigne M à destination des actionneurs de cette zone, le tout en temps réel.

Une interface homme - machine 9 permet la visualisation des contrôles effectués sur un synoptique (non représenté) et l'intervention humaine sur un pupitre (non représenté) lorsqu'elle s'avère nécessaire. La visualisation des contrôles et l'intervention sur un pupitre est également possible au PC2 (figure 2).

Pour transmettre les données à l'ordinateur 3 et en recevoir les ordres, les capteurs 6 et les actionneurs 4, 5 sont reliés électriquement à un répartiteur 8 par des liaisons électriques 7 et le répartiteur 8 est lui-même relié à l'ordinateur 3 par un ou plusieurs bus numériques 10 et éventuellement des liaisons analogiques. L'ordinateur simulateur 30 et le dispositif de commutation 60 seront abordés plus loin.

En référence à la figure 2, l'ordinateur 3 est structuré en six couches:
- une couche physique 11 de collecte des données comportant les lignes d'entrées TOR et des éventuelles mesures M à ce niveau converties en données numériques. Ces lignes de la couche 11 mémorisent tous les états TOR, résultant de tous les événements s'étant produits sur la zone contrôlée, et événements que l'on désignera par la suite événements externes ;
- une couche logique occupée par les pilotes (drivers) des périphériques éventuels et surtout d'un bloc système d'interruption 12. Le bloc 12 avertit en temps réel la couche supérieure ci-dessous de l'intervention d'événements externes, c'est-à-dire de changements d'états TOR ;
- une couche 13 de gestion temps réel des ressources, comportant typiquement un module moniteur temps réel 13, logiciel écrit et mémorisé en langage de base. Le moniteur temps réel maintient l'ordinateur 3 en éveil en le faisant tourner sur une boucle d'attente quand il n'y a rien à faire et active les fonctions concernées quand un événement intervient, comme on le verra par la suite ;
- une couche d'interprétation et d'exécution d'applications 14, essentiellement un interpréteur 14 pour interpréter, c'est-à-dire traduire en langage de base en temps réel et exécuter des logiciels applicatifs, c'est-à-dire des logiciels écrits et mémorisés en langage proche, ici, de l'exploitation d'un poste d'aiguillage ;
- une couche de graphes d'états (appellation dont on verra la justification plus loin), mémorisant les logiciels applicatifs ci-dessus, structurés en modules automatiques 15, ou automates 15. Dans l'ordinateur 3, lors de l'intervention d'événements externes, le moniteur 13 met à disposition les événements externes et active la couche d'interprétation et d'activation 14. Cette dernière appelle et interprète les automates 15 concernés un à la fois. Ces automates 15 émettent alors, éventuellement, des commandes vers les actionneurs 4, 5 par des lignes de sortie 17 et ils informent le personnel du poste 1 de l'événement qui a motivé leur appel grâce au synoptique de l'IHM 9. Ils peuvent aussi déclencher l'activation d'autres automates 15 en provoquant des événements internes qui seront introduits et expliqués ci-après ;
- une couche mémoire 16 mémorisant l'état global Fi de la zone ferroviaire sous contrôle et du système de contrôle / commande 3 du poste 1, état qui conditionne l'exécution des automates 15.

L'utilisation d'un langage applicatif permet au personnel d'exploitation du poste 1 de comprendre, voire de modifier, la programmation des automates 15 de l'application sans avoir à connaître le langage de base qui est beaucoup plus hermétique.

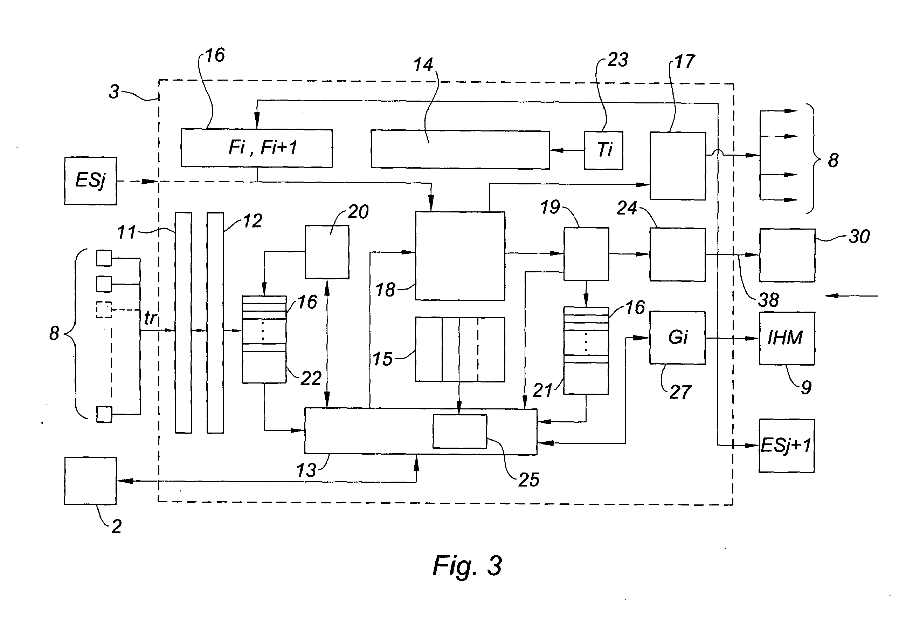

La couche d'interprétation 14 comporte en outre, en référence à la figure 3, un bloc de calcul 18, des modules de marquage 19 et 20 ou de rangement d'événements dans des piles d'attente 21 et 22 de traitement d'événements, et la couche 13 comporte une horloge interne 23 pour cadencer l'exécution des automates 15 périodiquement à des instants Ti et délivrer d'autres services temporels, notamment délivrer des tops temps réel tr de scrutation des lignes d'entrée 11, et un module 24 de présentation d'informations sous la forme de synoptique.

Le module de gestion 13 comporte une table de correspondance 25 pour faire correspondre au moins un module automatique 15 à tout événement interne ou externe. Cette table permet, suite à un événement, de retrouver le ou les automates 15 à activer dans la couche de graphes d'états qui les contient.

Par état global Fi de la zone ferroviaire et du système de contrôle commande, on entend généralement un état global instantané Fi qui, à un instant donné Ti, contient l'ensemble Ei des états binaires des entrées TOR et des sorties de commande, éventuellement des mesures collectées ou l'état de leur comparaison par rapport à des seuils prédéterminés, tous ces états reflétant la suite d'événements externes (repérés en, n prenant ses valeurs de 1 à N, en considérant N capteurs TOR) intervenus jusqu'à l'instant courant Ti.

Comme événement externe en, il peut par exemple s'agir du passage d'un train sur un tronçon de voie, ou de sa sortie, de l'arrivée en butée d'un aiguillage, matérialisant la bonne exécution de sa manoeuvre ou de tout autre événement donnant lieu à l'existence d'un état TOR. Il s'ensuit une tâche n à exécuter sur le réseau ferroviaire.

Fi contient aussi l'ensemble Ii des états TOR indicateurs d'événements internes (repérés ip, p variant de 1 à P, en considérant ces événements au nombre de P) qui résultent de l'exécution des modules automatiques 15.

Ainsi, comme événement interne ip, il peut s'agir du changement d'état d'une variable interne gérée par un ou plusieurs modules automates 15, ou d'une demande d'activation d'un automate 15 par un autre automate 15 en cours d'exécution.

L'état global instantané Fi permet de déduire et de mémoriser dans une mémoire 27 un état global fonctionnel instantané Gi de présentation de l'état du système 3 sur l'IHM 9. Cet état global Gi est une sélection ou un résumé d'états significatifs du contenu de Fi rendant plus facile le pilotage du système 3 par le personnel d'exploitation du poste 1. La mémoire 27 contient également une pile d'indicateurs extraits des états globaux Gi successifs pour servir de journal de bord ou d'aide au pilotage sur l'IHM 9.

Un état global instantané Fi à l'instant Ti est donc représenté par un vecteur binaire à N + P coordonnées, l'état global instantané externe Ei étant le vecteur des N premières valeurs binaires et l'état global instantané interne Ii le vecteur des P valeurs binaires restantes.

Grâce à un outil de conception tel que GRAFCET fournissant automatiquement, en fonction d'un cahier des charges, des graphes d'états d'un système temps réel et l'ensemble des états globaux accessibles EGA du système par ces graphes, on a ici préalablement défini un nombre fini J d'états globaux particuliers ESj comme étant des états stabilisés et sûrs du réseau ferroviaire.

Bien sûr, pour que le système 3 réponde aux besoins du poste 1, les états globaux ESj stabilisés font partie des états globaux instantanés Fi possibles. Ils correspondent à des états finaux de tâches commandées au système 3 par l'IHM 9 (ou par le système 3 lui-même) et exécutées par des automates 15.

Et pour obtenir la sûreté du réseau, on procède comme suit :
- on établit la liste des caractéristiques de fonctionnement des actionneurs 4, 5, entraînant des possibilités de contrôle de bon fonctionnement (par exemple une aiguille contrôlant à droite ne peut entraîner un état global résultant d'une aiguille contrôlant à gauche), c'est-à-dire des propositions qui formalisent les états implicites de la fonction pour caractériser des propriétés de sécurité,
- on établit la liste des événements redoutés que l'on veut éviter, ici la liste dont il est fait mention ci-après, pour déduire par complémentarité, comme ci-dessous expliqué, les propriétés essentielles de sauvegarde du système 3, comme indiqué ci-dessous.

Pour déduire par complémentarité de la liste des événements redoutés les propriétés de sauvegarde du système 3, on formalise les événements redoutés par des états globaux FXj du réseau ferroviaire et de la circulation des trains, et tout automate 15 ne s'autorise à agir que si tous les états globaux instantanés Fi que son action entraîne appartiennent à l'ensemble complémentaire de l'ensemble des états FXj dans l'ensemble des états globaux accessibles EGA.

Pour un poste d'aiguillage 1, les événements redoutés sur le réseau ferroviaire sont les suivants :
- nez à nez ou télescopage de deux trains,
- prise en écharpe de deux trains,
- entrebâillement d'un aiguillage,
- rattrapage d'un train par le suivant,
- dérive d'un wagon,
- déraillement,
- collision avec un obstacle.

Les propriétés de sauvegarde des automates 15 seront, par exemple dans le premier cas, de s'interdire toute commande sur les sorties 17 si le système 3 doit pour cela passer par un seul état Fi identique à un seul des états FXj ci-dessus, révélant que deux trains sont simultanément en sens opposé sur la même voie.

Chacun des automates 15 doit déboucher sur un nombre fini d'états finals quels que soient les événements ayant motivé leur action. En d'autres termes chaque module automatique 15 est un automate d'états finis, concept mathématique connu des spécialistes des langages formels. Autrement dit, les modules automatiques 15 sont agencés pour qu'il ne puisse résulter de leur action qu'un nombre fini d'états globaux Fi.

On va maintenant expliquer le fonctionnement du système temps réel 3.

Initialement, le système 3 est dans un état global stabilisé ESj « initial ». Pour cela une pile de marquage parallèle à la table 25, mais ici incluse dans la mémoire 16, des automates 15 contient des variables internes prédéterminées indicatives de leur état ou statut de fonctionnement initial, au moment de la mise en exploitation.

Il est ici prévu une fonction initialisation FI agencée pour prendre en compte la combinaison des états des variables d'entrées-sorties 11, 17 et des variables internes de la pile de marquage des automates 15 à l'instant initial.

L'état global stabilisé initial ESj résulte de l'exécution de la fonction initialisation FI.

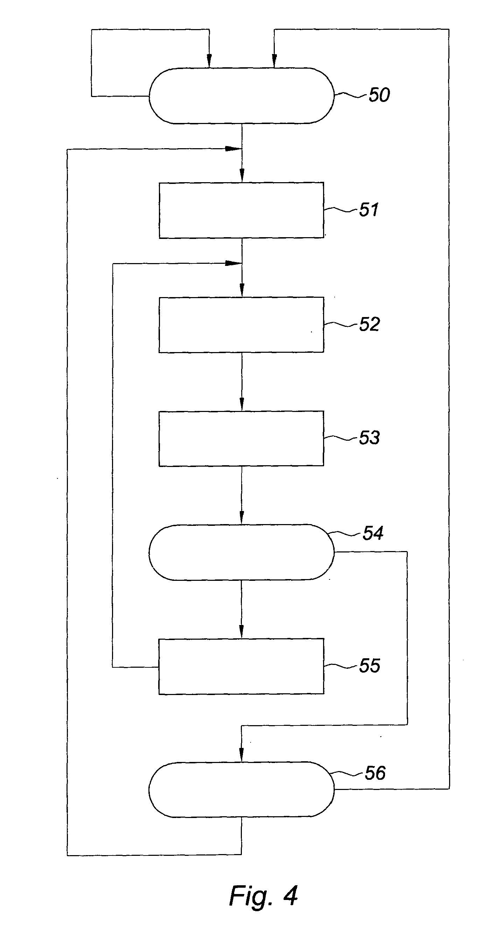

Tant qu'il n'y a pas d'événement, le module de gestion 13 boucle sur lui-même en étape d'attente 50 (figure 4).

Lors de cette étape 50, en référence aux figures 3 et 4, tout changement d'état TOR sur les lignes d'entrées 11 est détecté par le bloc 12, lequel mémorise l'événement correspondant en dans la pile d'attente 22, en queue de liste.

Lorsque lors d'une étape 51, l'événement en est le plus ancien de la pile et arrive en tête de liste, le moment venu, précisé par la suite, il est pris en charge par le module de gestion 13 pour que soit exécutée la tâche n correspondante.

A l'étape suivante 52, le module 13 recherche dans sa table 25 le ou les modules automatiques 15 devant effectuer cette tâche n, ou du moins la commencer. Il charge alors le premier module 15 dans le bloc de calcul 18.

A l'étape 53, l'interpréteur 14 interprète et exécute simultanément l'automate 15 dans le bloc de calcul 18.

Au cours de cette exécution, l'automate 15 peut :
- faire évoluer l'état de variables internes Ii qu'il gère, créant ainsi des événements internes ip, et déclencher simultanément le module marqueur 19,
- tester des variables tant internes qu'externes dans le vecteur Fi,
- émettre des commandes vers les lignes de sortie 17 pour commander les actionneurs 4, 5 nécessaires,
- lancer des temporisations, ces temporisations donnant lieu à l'affectation de valeurs binaires à des variables internes pour servir d'indicateurs de temporisation à d'autres automates 15,
- exécuter des fonctions de signalisation ou d'alarme,
- vérifier que les propriétés de sauvegarde sont respectées,
- effectuer des calculs, etc.

A la terminaison de l'exécution du module 15 l'interpréteur 14 déclenche l'exécution du module 19 marqueur d'événements internes.

Lors de cette étape 53, le module marqueur 19 range systématiquement, s'il y en a, les événements internes ip dans la pile 21 des événements internes mais n'alerte le module de gestion 13 sur le fait qu'il y a des événements internes à traiter qu'en fin d'exécution de l'automate 15, de façon à ne traiter qu'un automate 15 à la fois.

A la réception de l'alerte du module 19, à une étape 54, le module 13 vérifie le contenu de la pile 21.

Si la pile 21 n'est pas vide, la tâche n correspondant à l'événement externe en n'est pas terminée et le module 13 extrait, à une étape 55, l'événement interne le plus ancien et retourne à l'étape 52 ci-dessus, pour, comme pour les événements externes, rechercher dans sa table 25 le module automatique 15 à exécuter, puis lancer l'interpréteur 14 pour l'interpréter et simultanément l'exécuter.

Tant que la pile 21 contient un événement interne, un nouveau module 15 est à rechercher dans la table 25 et à activer dans le bloc 18. Les automates 15 attachés à une tâche n sont donc tous potentiellement les noeuds d'un graphe d'états □n correspondant à cette tâche n, noeuds liés entre eux par des événements internes ip qui en constituent les branches. La couche des automates 15 est donc appelée couche de graphes d'états.

Ces graphes conduisent aux états globaux accessibles vus plus haut.

Si la pile 21 est vide, le module 13, ou la couche 14, examine, dans la table 25, la présence d'un autre automate 15 à exécuter pour le traitement de l'événement en en cours, et dans ce cas le charge dans le bloc calcul 18 et provoque à nouveau l'exécution de l'étape 52. Sinon la tâche n concernant l'événement en est terminée et le module de gestion 13 lance le module 20 marqueur d'événements externes.

Le module marqueur 20 fait alors évoluer la pile 22 des événements externes en y supprimant l'événement en qui vient d'être traité puis alerte en retour le module de gestion 13 sur le fait que l'événement externe suivant en+1 de la pile 22, s'il existe, peut être pris en compte.

Le module 13 vérifie alors à une étape 56 si la pile 22 est vide ou non et
- si elle n'est pas vide, le module 13 retourne à l'étape 51 pour traiter l'événement externe en+1 suivant,
- si elle est vide, aucune tâche n n'est à exécuter, le module 13 retourne sur sa boucle d'attente en étape 50.

On comprend que le module 13 attend la fin de la tâche n en cours avant d'en lancer une autre n+1, et donc n'autorise l'exécution d'une tâche n correspondant à un événement externe en quelconque que si aucune tâche n-1 correspondant à un autre événement en-1 n'est déjà en cours d'exécution.

Aucun événement externe survenant pendant la durée de l'exécution d'une tâche, n'est donc pris en compte, ce qui évite l'évolution non contrôlée du vecteur état global instantané Fi pendant l'exécution des automates 15 d'une tâche. Tout se passe comme si la variable temps était externe au système 3, au même titre que les événements externes.

En résumé, pour que la preuve qu'un événement redouté ne survienne, il faut que les règles d'interprétation logiques et temporelles soient très claires. C'est pourquoi on sépare le système temps réel 3 en deux sous-systèmes temps réels différents matérialisés par les deux piles 21 et 22, dont les temps de scrutation tr et de cadencement Ti s'écoulent le plus souvent de façon indépendante et ne se recalent l'un par rapport à l'autre que seulement quand un des états globaux stabilisés prédéterminés ESj est atteint.

Le temps tr n'est pas géré par l'interpréteur 14, ni même par la couche de graphes d'états.

Par contre, des événements internes peuvent être traitées comme des événements externes et être rendues externes au système 3. Ces événements sont alors rangés dans la pile 22 au lieu de la pile 21 par le module de gestion 13 (avec l'aide des modules de marquage 19 et 20). Ce peut par exemple être le cas des variables internes servant d'indicateurs de temporisation en cours, lorsque elles doivent lancer une tâche différente de celle en cours. C'est, dans le système 3, une autre forme d' « extériorisation » du temps Ti en temps tr.

Dans ce dernier cas, même les temporisations cadencées par les instants Ti échappent aussi au contrôle de l'interpréteur 14 et des automates 15.

Au cours de l'étape 53, le module marqueur 19 transmet aussi au module 24 de présentation d'informations l'évolution de l'état en en cours de traitement puis, en temps réel, des états ip des variables internes affectées par le module 15.

Le module 24 génère alors dans la mémoire 16, à chaque instant Ti, l'état global instantané Fi du système, et dans la mémoire 27 l'état global fonctionnel instantané Gi, ainsi rendu disponible pour l'IHM 9.

Quand le module 13 reçoit l'alerte du module 20 l'invitant à prendre en compte l'événement externe en+1 suivant, et à parcourir le graphe □n+1 en fonction de Fi+1, il peut vérifier que l'état global instantané Fi+1 contient bien un état global stabilisé ESj+1 et émettre une alarme en cas d'absence d'état global instantané.

Mais ici, cette vérification est faite une fois pour toutes au cours d'une phase de validation suivant la phase de création du système, qui va maintenant être expliquée.

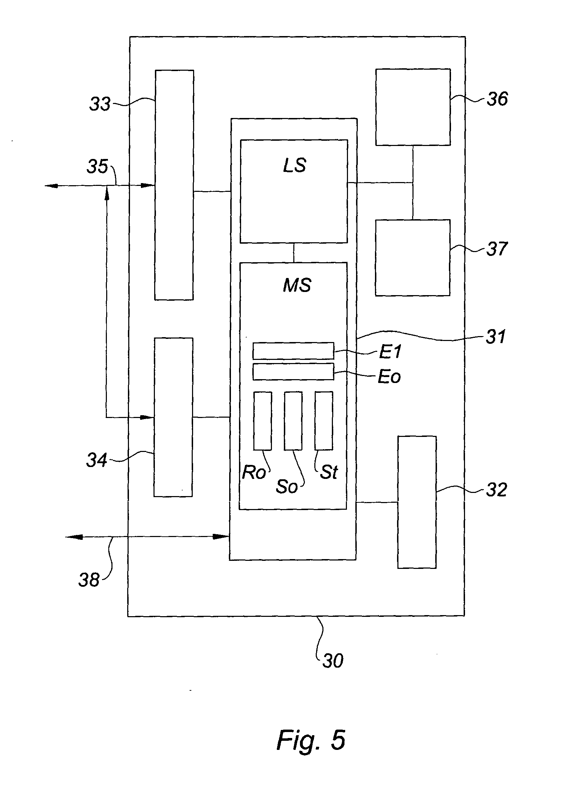

Selon une première forme de réalisation, classique, déjà évoquée au début du document, du système permettant cette phase de validation, en référence aux figures 1 et 5, on remplace les infrastructures du réseau ferroviaire, répartiteur 8 compris, par un autre ordinateur simulateur 30, de façon à tester systématiquement et automatiquement toutes les branches des graphes □ n.

L'ordinateur 30, visible sur les figures 1 et 3 et plus détaillé en figure 5, peut être physiquement identique à l'ordinateur 3. Il comporte notamment des lignes d'entrées 33 et de sorties 34, une interface IHM 32, une unité centrale 31 hébergeant un logiciel de simulation LS, des mémoires 36 et 37 parallèles aux mémoires 16 et 27, et une mémoire de travail MS du logiciel LS.

Les entrées sorties 33-34 de l'ordinateur 30 sont reliées aux entrées sorties 11-17 du système-ordinateur 3 par l'intermédiaire d'un dispositif de commutation 60 à deux positions R et S, comme indiqué sur la figure 1, de telle sorte que dans la position R (réel), l'ordinateur 3 est connecté au répartiteur 8, et que dans la position S (simulé) l'ordinateur 3 est connecté à l'ordinateur 30.

En position S, les sorties 34 de l'ordinateur 30 sont reliées aux entrées 11 de l'ordinateur 3 et les entrées 33 de l'ordinateur 30 sont reliées aux sortie 17 de l'ordinateur 3, de sorte qu'à partir du logiciel de simulation LS de l'ordinateur 30 et par ses sorties 34, on peut simuler les entrées 11 comme si elles venaient du répartiteur 8.

C'est le cas inverse pour les sorties 17 qui sont récupérées par les entrées 33 de l'ordinateur 30.

Les ordinateurs 3 et 30 sont en outre reliés par une liaison informatique 38 de débit suffisant pour que l'ordinateur 30 puisse bloquer et débloquer le cadencement Ti de l'horloge 23, initialiser et lire les évolutions des états globaux instantanés Fi et Gi des mémoires 16 et 27 respectivement à partir de ou dans ses mémoires 36 et 37.

La mémoire MS comporte des piles Ro, So et St pour mémoriser les états globaux ESj et les états globaux FXj. Ro permet d'exécuter une simulation de tâche n et So contient les J états globaux ESj à tester, obtenus automatiquement par un simple logiciel spécifique de tri. St contient les états globaux ESj testés.

La mémoire MS contient également une pile Eo contenant les N valeurs matérialisant les états binaires des événements en et une table E1 des alertes à enregistrer.

Le logiciel LS doit remplir en outre au moins les conditions suivantes :
- comporter des fonctions d'alerte déduites de la formalisation des caractéristiques des actionneurs qu'il commande,
- être doté des propriétés de sauvegarde déduites par complémentarité de la liste des événements redoutés.

Pour déterminer les fonctions d'alerte des modules automatiques 15 à partir de la formalisation des caractéristiques des actionneurs qu'il commande, on formalise les conditions implicites de la commande en cours et on les confronte à l'état du réseau, par exemple compte tenu qu'un aiguillage 4 à manoeuvrer est un aiguillage à gauche, une fonction d'alerte peut consister à vérifier que les états correspondants ESj du réseau et de la circulation des trains fournis par le PC 2 et / ou les capteurs 6 sont compatibles à la manoeuvre à gauche en cours.

Cette première forme de réalisation du système de validation nécessite l'adjonction d'une infrastructure de test qui nécessite de s'écarter des conditions d'exploitation finale. Si on teste les automatismes dans leur contexte logique final, on ne les teste pas dans leur contexte temporel final.

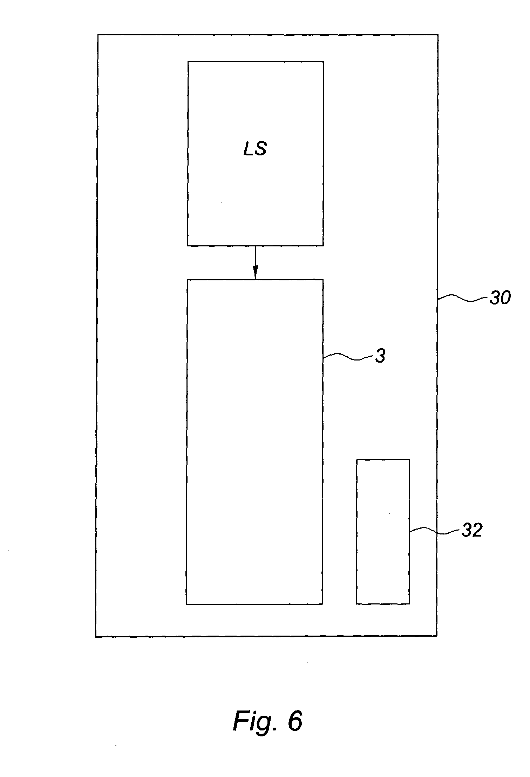

C'est pourquoi on préfère une seconde forme de réalisation du système de validation, montré en figure 6, qui permet réellement d'établir une validation formelle et qui est cependant matériellement bien plus simple.

Ce second système de validation permet en effet la mise en oeuvre d'un procédé qui repose pleinement sur le fait que les modèles définis par les outils de conception sont les automates 15 et sont donc directement interprétables par l'ordinateur 3.

La validation consiste à vérifier qu'ils respectent toutes les propriétés de sécurité dans le contexte d'exploitation finale complet, matériel et surtout temporel. On effectue ainsi une preuve formelle de sécurité sur les modèles eux-mêmes, qui peuvent en réalité être les transcriptions informatiques interprétables des spécifications de conception elles-mêmes.

Pour cela :
- l'ordinateur 30 contient l'ordinateur 3 et le logiciel LS décrit ci-dessus aménagé pour communiquer avec ce dernier dans l'ordinateur 30. Ainsi l'ensemble des données contenues dans l'ordinateur 3, décrites ci-dessus et montrées dans les figures 2, 3, 4 sont également disponibles pour l'ordinateur 30 et son logiciel LS, et la liaison informatique 38 entre les deux ordinateur 3 et 30 ainsi que les mémoires 36 et 37 ne sont pas nécessaires.
- Le logiciel de simulation LS simule tous les événements externes possibles sur tous les états globaux stabilisés possibles, de manière automatique, à partir des graphes. Ainsi, dans cette forme de réalisation du système de validation, les entrées / sorties 33, 34 de l'ordinateur 30 n'ont pas lieu d'être reliées aux entrées / sorties 11, 17 de l'ordinateur 3. Le commutateur 60 et les lignes d'entrées sorties 33 et 34 n'existent pas. C'est le logiciel LS qui contrôle et commande l'ordinateur 3, automatiquement, notamment selon le procédé qui va décrit ci-après.
- L'ordinateur 30 dispose de toutes les données et informations présentes dans l'ordinateur 3 et nécessaires pour réaliser la validation en les y puisant. Par ailleurs, le blocage / déblocage du cadencement de l'horloge 23 n'est pas nécessaire, l'horloge temps réel 23 de l'ordinateur 3 pouvant assurer aussi l'ensemble des fonctions de l'horloge temps réel de l'ordinateur 30.
- Les autres éléments de l'ordinateur 30 ci-dessus décrits sont présents.

Ainsi, grâce à ce second système 30, on obtient le fonctionnement du système 3 exactement dans les mêmes conditions matérielles et temporelles pendant la validation par le système 30 et pendant l'exploitation.

Un avantage supplémentaire de cette seconde forme de réalisation est qu'il est possible, sur l'ordinateur 30, d'activer un mode d'exécution pas à pas impossible à mettre en oeuvre sur le système temps réel 3 programmé de façon définitive.

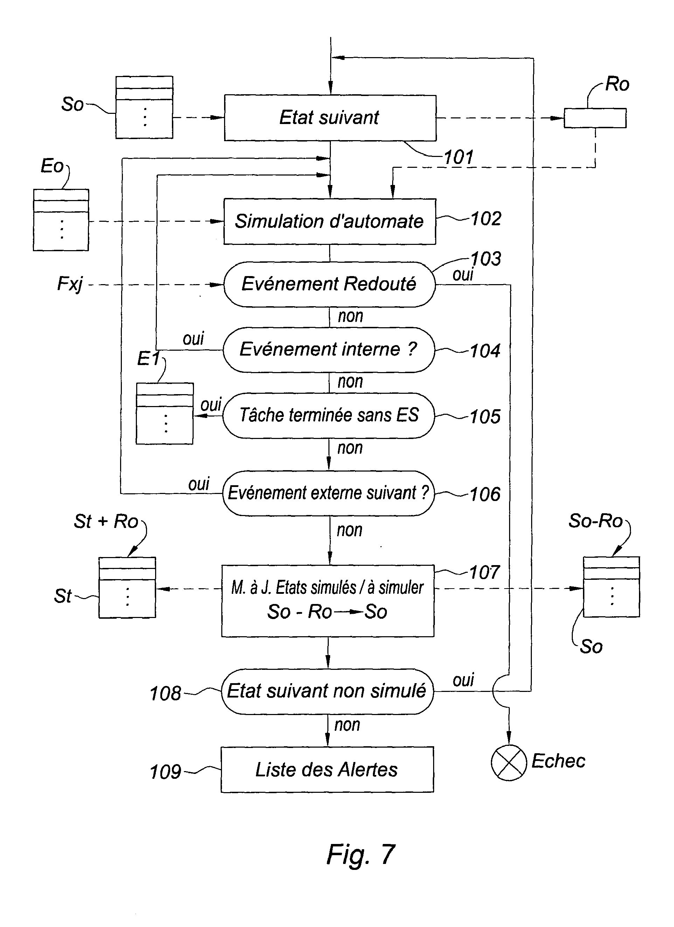

Dès lors, et quel que soit le système adopté, pour valider le système 3, en référence à la figure 7, la simulation, ou le contrôle et la commande de l'ordinateur 3 effectués par le logiciel LS dans l'ordinateur 30 consiste en l'exécution des étapes suivantes :
- étape 101 : il extrait de So un état global stabilisé ESj (par exemple j = 1 pour commencer) du système 3 et initialise les mémoires Ro et 16 avec ce premier état global stabilisé ;
- étape 102 : il extrait de Eo un événement externe en (par exemple n = 1 en premier) qu'il injecte dans la pile 22 et il lance l'ordinateur 3 en débloquant l'horloge 23 ;
- étape 103 : il scrute les états globaux instantanés successifs Fi des instants Ti délivrés par le module 24 et vérifie que ces états globaux ne sont pas caractéristiques d'événements redoutés en les comparant aux états globaux FXj. Dans ce cas, il stoppe la simulation pour correction ;
- sinon, étape 104 : il compare les états globaux instantanés successifs Fi à tous les états globaux stabilisés ESj de la pile So et passe à l'étape suivante 105 dès qu'il a obtenu une coïncidence, c'est-à-dire un état global stabilisé résultant ESj, sauf si la pile 21 n'est pas vide ;
- dans ce dernier cas, il continue la simulation pour obtenir un ou plusieurs autres états globaux stabilisés ESj résultants, sauf si l'état global stabilisé obtenu est un état global stabilisé présent dans la pile St, auquel cas il passe quand même à l'étape 105. Autrement dit, dans ce dernier cas, on continue la simulation de la tâche n, état global stabilisé après état global stabilisé, jusqu'à obtenir un état global stabilisé déjà simulé et mémorisé dans St ;
- en étape 105, s'il n'aboutit pas à un état global stabilisé à la fin d'une tâche, il enregistre une alerte dans la table E1 et passe à l'étape 106 ;
- étape 106 : il bloque l'horloge 23. Si tous les événements en de Eo ont été simulés, il passe à une étape 107, sinon il exécute à nouveau les étapes ci-dessus à partir de l'étape 101 en simulant, à l'étape 102, l'événement externe en+1 suivant ;
- étape 107 : la simulation de l'état global ESj étant complètement testée pour tous les N événements externes incidents en, il ajoute le contenu de Ro (qui contient ESj simulé) à la pile St et le retire de la pile So ;
- étape 108 : si la pile So est vide, la simulation est terminée, il passe à une dernière étape 109 de sortie, sur l'IHM 32, de listes d'événements Eo et d'états globaux stabilisés testés St et d'une liste d'alertes tirées de la table E1, sinon il effectue à nouveau l'étape 101 et les suivantes en extrayant l'état global stabilisé suivant ESj+1 dans So pour continuer la simulation état global stabilisé par état global stabilisé et événement externe par événement externe, tant que toutes les branches de tous les graphes □n n'ont pas été parcourues, c'est-à-dire tant que toutes les combinaisons possibles d'événements et d'états globaux stabilisés n'ont pas été simulées.

On peut ainsi obtenir la validation exhaustive du système 3 et donc une preuve formelle de sa sécurité de fonctionnement en très peu de temps.

Si l'on a opté pour le premier système de validation, après la simulation, pour mise en service, il suffit de positionner le commutateur 60 en position R et le système 3 fonctionne alors dans les mêmes conditions matérielles et temporelles qu'au cours de la phase de validation. Il n'y a donc pas de mise en oeuvre matérielle différente susceptible d'introduire une perte d'intégrité de la validation relativement au système en exploitation. Il en est de même d'ailleurs pour le second système de validation.

Pour réduire encore la complexité du système ou le nombre de ses états globaux, on peut limiter les simulations à des sous ensembles d'états globaux stabilisés Gi partiels, automatiquement déduits à partir des états globaux stabilisés ESj.

Les fonctions des modules automatiques 15 peuvent, comme il a déjà été dit plus haut, être limitées à celles autorisées au personnel exploitant par les règlements en vigueur dans les postes d'aiguillage.

## Revendications

1. Procédé de validation d'un système (3) temps réel de contrôle / commande de processus industriel, le système temps réel (3) comportant des entrées (11), dont les changements d'état sont représentatifs d'événements externes (en), des sorties (17), destinées à commander des actionneurs externes (4, 5), et des modules automatiques (15) agencés pour exécuter des tâches (n) en réponse aux dits événements (en) et agir sur lesdits actionneurs (4, 5) par lesdites sorties (11), l'ensemble des états des entrées et sorties à un instant donné constituant un état global instantané (Fi) du système (3), l'ensemble des états des entrées et sorties obtenu à la fin de l'exécution d'une tâche (n) constituant un état global stabilisé (ESj) du système (3), le procédé de validation comportant les étapes suivantes :
- on établit une liste d'événements redoutés (FXj),
- on en déduit par complémentarité les fonctions essentielles desdits modules automatiques,
- on établit une liste des caractéristiques de fonctionnement desdits actionneurs (4, 5),
- on définit un état global stabilisé initial (ESj) du système (3),
- à partir dudit état global stabilisé initial (ESj), on simule un événement externe (en) et un seul pour obtenir un état global stabilisé résultant (ESj+1) et
- on continue la simulation événement (en+1) après événement (en) pour, état global stabilisé (ESj+1) après état global stabilisé (ESj), obtenir un état global stabilisé déjà simulé (St).

2. Procédé selon la revendication 1, dans lequel on continue la simulation ci-dessus tant que toutes les combinaisons possibles d'événements (en) et d'états globaux stabilisés (ESj) n'ont pas été simulées.

3. Procédé selon l'une des revendications 1 et 2, dans lequel on arrête la simulation dès qu'on obtient un état global instantané (Fi) caractéristique d'un événement redouté (FXj).

4. Procédé selon l'une des revendications 1 à 3, dans lequel, si on ne peut obtenir d'état global stabilisé (ESj+1) à la suite de la simulation d'un événement (en) et d'un état global stabilisé (ESj) particuliers, on émet une alerte (E1).

5. Procédé selon l'une des revendications 1 à 4, dans lequel on simule systématiquement tous les événements externes possibles (en) sur tous les états globaux stabilisés (ESj).

6. Procédé selon l'une des revendications 1 à 5, dans lequel l'exécution d'une tâche (n) correspondant à un événement quelconque (en) n'est autorisée que si aucune tâche (n-1) n'est déjà en cours d'exécution.

7. Procédé selon l'une des revendications 1 à 6, dans lequel les tâches (n) correspondant à tous les événements externes possibles (Eo) sont testées pour tous les états globaux stabilisés initiaux (So) possibles.

8. Procédé selon la revendication 7, dans lequel les tâches (n) ne peuvent être déclenchées qu'à partir de ces mêmes états globaux stabilisés initiaux (So).

9. Procédé selon l'une des revendications 1 à 8, dans lequel on limite les simulations à des sous-ensembles (Gi) d'états globaux stabilisés déduits des états globaux stabilisés (ESj), et on limite les fonctions des modules automatiques (15) à celles autorisées par les règlements en vigueur dans le processus industriel.

10. Système temps réel (3) de contrôle / commande de processus industriel comportant un module (13) de gestion, des entrées (11) tout ou rien représentatives d'événements externes (en) et des sorties (17) tout ou rien commandant des actionneurs externes (4, 5), des modules (15) automatiques d'exécution de tâches (n) prédéterminées pour, en réponse aux dits événements (en), agir sur lesdites sorties (17), l'ensemble des états des entrées (11) et sorties (17) à un instant donné (Ti) constituant un état global instantané (Fi) du système (3), l'ensemble des états des entrées (11) et sorties (17) obtenu à la fin d'une exécution de tâche (n) constituant un état global stabilisé (ESj) du système (3), le système étant **caractérisé par le fait que** le module de gestion (13) est agencé pour n'autoriser (20) l'exécution d'une tâche (n) correspondant à un événement externe (en) quelconque que si aucune tâche (n-1) correspondant à un autre événement (en-1) n'est en cours d'exécution et les modules automatiques (15) sont agencés pour que leur action correspondante ne débouche que sur un nombre fini d'états globaux (Fi).

11. Système selon la revendication 10, comportant une couche physique (11) de collecte de données, un bloc système d'interruption (12), une couche de gestion des ressources (13), une couche d'interprétation (14), et une couche de graphes d'états et d'automates (15).

12. Système selon la revendication 11, dans lequel les automates (15) sont des automates d'états finis et comportent des fonctions d'alerte déduites des caractéristiques des actionneurs (4, 5) qu'ils commandent et sont dotés de propriétés de sauvegarde déduites par complémentarité d'une liste d'événements redoutés dans le processus industriel.

13. Système selon l'une des revendications 10 à 12, dans lequel il est prévu une pile de marquage des automates (15) contenant leur statut initial et une fonction initialisation (FI) agencée pour prendre en compte la combinaison des états des variables d'entrées-sorties (11, 17) et du statut des automates (15) à l'instant initial.

14. Système selon l'une des revendications 11 à 13, dans lequel les automates (15) sont agencés pour faire évoluer l'état de variables internes (Ii), émettre des commandes vers les actionneurs (4, 5), lancer des temporisations, exécuter des fonctions de signalisation ou d'alarme, vérifier que les propriétés de sauvegarde sont respectées.

15. Système selon l'une des revendications 10 à 14, **caractérisé par le fait qu'**il est séparé en deux sous-systèmes temps réels différents matérialisés par deux piles d'attente (21, 22) de scrutation des entrées (11) et de cadencement des automates (15), dont les temps de scrutation (tr) et de cadencement (Ti) ne se recalent l'un par rapport à l'autre que lorsque un état global stabilisé (ESj) est atteint.

16. Système selon la revendication 15, dans lequel le temps de scrutation (tr) est géré par le bloc d'interruption (12) et le temps de cadencement (Ti) par la couche de gestion des ressources (13).

17. Système de validation d'un système temps réel (3) selon l'une des revendications 10 à 16, **caractérisé par le fait qu'**il comporte un ordinateur (30) contenant le système temps réel (3) et une fonction de simulation (LS) dotée de propriétés de sauvegarde déduites par complémentarité d'une liste d'événements redoutés et agencée pour commander le système (3) et le contrôler en comparant les états globaux instantanés successifs (Fi) atteints par le système (3) et en vérifiant que ces états globaux (Fi) ne sont pas caractéristiques de ces événements redoutés.

18. Procédé selon l'une des revendications 1 à 9, dans lequel le système temps réel de contrôle / commande (3) contrôle et commande des éléments d'un réseau de chemins de fer du groupe comprenant des aiguillages (4), des panneaux de signalisation (5), des portes de wagons.

19. Système temps réel de contrôle / commande (3) selon l'une des revendication 10 à 17, qui contrôle et commande des éléments d'un réseau de chemins de fer du groupe comprenant des aiguillages (4), des panneaux de signalisation (5), des portes de wagons.
